(19) Europäisches Patentamt
European Patent Office
Office européen des brevets

(11) **EP 1 924 821 B1**

(12) **EUROPÄISCHE PATENTSCHRIFT**

(45) Veröffentlichungstag und Bekanntmachung des Hinweises auf die Patenterteilung:
**18.01.2017 Patentblatt 2017/03**

(21) Anmeldenummer: **06778397.7**

(22) Anmeldetag: **30.08.2006**

(51) Int Cl.:
***G01C 19/5649*** *(2012.01)*

(86) Internationale Anmeldenummer:
**PCT/EP2006/065815**

(87) Internationale Veröffentlichungsnummer:
**WO 2007/031403 (22.03.2007 Gazette 2007/12)**

(54) **VERFAHREN ZUM BETRIEB EINES VIBRATIONSKREISELS UND SENSORANORDNUNG**

METHOD FOR OPERATING A VIBRATING GYROSCOPE AND SENSOR ARRANGEMENT

PROCEDE POUR FAIRE FONCTIONNER UN GYROSCOPE VIBRANT ET DISPOSITIF DE DETECTION

(84) Benannte Vertragsstaaten:
**DE FR IT**

(30) Priorität: **12.09.2005 DE 102005043560**

(43) Veröffentlichungstag der Anmeldung:
**28.05.2008 Patentblatt 2008/22**

(73) Patentinhaber: **Continental Automotive GmbH 30165 Hannover (DE)**

(72) Erfinder:
• **MAYER-WEGELIN, Raphael 61381 Friedrichsdorf (DE)**
• **MORELL, Heinz-Werner 67659 Kaiserslautern (DE)**

(74) Vertreter: **Brand, Markus et al c/o Continental Teves AG & Co. oHG, Guerickestrasse 7 60488 Frankfurt am Main (DE)**

(56) Entgegenhaltungen:
EP-A- 1 600 732     WO-A-2004/020948
WO-A-2005/001381    JP-A- 1 032 113

EP 1 924 821 B1

## Beschreibung

Die Erfindung betrifft ein Verfahren zum Betrieb eines Vibrationskreisels und eine Sensoranordnung mit einem Vibrationskreisel, der einen Resonator darstellt und Teil mindestens eines Regelkreises ist, der den Vibrationskreisel durch Zuführung eines Erregersignals mit seiner Eigenfrequenz erregt, wobei dem Vibrationskreisel ein Ausgangssignal entnehmbar ist, aus dem durch Filterung und Verstärkung das Erregersignal abgeleitet wird.

Beispielsweise aus EP 0 461 761 B1 sind Drehratensensoren bekannt geworden, bei welchen ein Vibrationskreisel in zwei gegenüber einer Hauptachse radial ausgerichteten Achsen angeregt wird, wozu ein primärer und ein sekundärer Regelkreis mit entsprechenden Wandlern an dem Vibrationskreisel vorgesehen sind. Werden derartige Drehratensensoren in Fahrzeugen zur Stabilisierung der Fahrzeugbewegung eingesetzt, ist eine Funktion des Drehratensensors unmittelbar nach Inbetriebsetzung des Fahrzeugs erforderlich. Diese wird jedoch durch das Einschwingverhalten des Regelkreises verzögert.

WO 2004/020948 A offenbart ein Verfahren zum Betrieb eines Vibrationskreisels und eine Sensoranordnung mit solch einem Vibrationskreisel, der Teil eines Regelkreises zu seiner Erregung ist. Nach dem Einschalten der Sensoranordnung wird die Frequenz des Erregersignals dadurch eingestellt, dass vor Zuführung des Erregersignals der Vibrationskreisel zu einer freien Schwingung angeregt wird, dass die Frequenz der freien Schwingung gemessen wird und dass das Erregersignal mit der gemessenen Frequenz dem Vibrationskreisel zugeführt wird.

EP 1 600 732 A ist ein zwischenveröffentlichtes Dokument nach Artikel 54(3) EPÜ und beschreibt ein Verfahren zum Betrieb eines Vibrationskreisels und eine Sensoranordnung mit solch einem Vibrationskreisel, bei dem aus einem zuvor gemessenen und in einem Speicher abgelegten Wert der Eigenfrequenz und Parametern (z.B. die Position des Antriebselements), die eine Änderung der Eigenfrequenz seit der Messung bewirken, ein Anfangswert für die Eigenfrequenz berechnet wird und bei dem das Erregersignal mit dem berechneten Anfangswert der Frequenz dem Vibrationskreisel zugeführt wird.

Aufgabe der vorliegenden Erfindung ist es daher, das Einschwingen des Regelkreises zu beschleunigen. Diese Aufgabe wird erfindungsgemäß dadurch gelöst, dass nach dem Einschalten einer Sensoranordnung mit dem Vibrationskreisel aus einem zuvor gemessenen und in einem Speicher abgelegten Wert der Eigenfrequenz und Parametern, die eine Änderung der Eigenfrequenz seit der Messung bewirken, ein Anfangswert für die Eigenfrequenz berechnet wird und dass das Erregersignal mit dem berechneten Anfangswert der Frequenz dem Vibrationskreisel zugeführt wird.

Mit dem erfindungsgemäßen Verfahren ist es möglich, den Anfangswert so nahe an die tatsächlich vorhandene Eigenfrequenz zu nähern, dass ein Einschwingvorgang äußerst kurze Zeit benötigt. Bei dem erfindungsgemäßen Verfahren ist vorgesehen, dass der Anfangswert aus dem gespeicherten Wert, dessen Temperaturabhängigkeit und der beim Einschalten gemessenen Temperatur berechnet wird. Sofern bei der Messung des zu speichernden Wertes, die regelmäßig in einem Abgleichverfahren im Rahmen des Herstellungsprozesses erfolgt, die Temperatur des Vibrationskreisels nicht konstant ist, kann zusätzlich noch der Wert der beim Abgleich herrschenden Temperatur abgespeichert werden. In vielen Fällen ist die Temperaturabhängigkeit der Eigenfrequenz konstant, so dass die beim Abgleichverfahren nicht speziell ermittelt und gespeichert werden muss, sondern als Konstante in den Speicher eingelesen werden kann.

Zur weiteren Beschleunigung des Einschwingens dient eine Weiterbildung des erfindungsgemäßen Verfahrens dadurch, dass ein im Regelkreis vorhandener Phasendetektor mit dem Ausgangssignal bereits in eine Anfangsphase beaufschlagt ist und dass eine Phasenregelung verzögert eingeschaltet wird. Dabei ist vorzugsweise vorgesehen, dass nach dem Einschalten der Phasenregelung eine Verstärkungsregelung eingeschaltet wird.

Diese Weiterbildung kann dadurch verbessert werden, dass das Erregersignal dem Vibrationskreisel in eine Anfangsphase mit einer maximal zulässigen Amplitude zugeführt wird.

Eine Ausführungsform der Erfindung dient dazu, Fehlfunktionen oder Ausfälle möglichst vorzeitig zu erkennen. Dies wird dadurch erreicht,

- dass zur Überwachung aus der Differenz zwischen dem aktuellen Wert der Eigenfrequenz einem zuvor bei einem Abgleich gemessenen und in einem Speicher abgelegten Wert der Eigenfrequenz, der bei einer Referenztemperatur gemessen wurde, und aus dem Temperaturkoeffizienten der Eigenfrequenz ein erster Wert der Temperaturänderung gegenüber der Messung berechnet wird,

- dass aus der Differenz zwischen den Ausgangsgrößen eines Temperatursensors bei der aktuellen Temperatur und bei der in dem Speicher abgelegten Referenztemperatur und dem Temperaturkoeffizienten des Temperatursensors ein zweiter Wert der Temperaturänderung gegenüber der Messung berechnet wird,

- dass die beiden berechneten Werte verglichen werden und

- dass bei einer ein vorgegebenes Maß überschreitenden Abweichung ein Fehlersignal erzeugt wird.

Bei dieser Ausführungsform ist vorzugsweise vorgesehen, dass in die Berechnung eine Korrekturtemperatur einbezogen wird, die gegenüber dem Abgleich des Temperatursensors geänderte thermische Bedingungen berücksichtigt.

Eine vorteilhafte Ausgestaltung der Weiterbildung besteht darin, dass die Korrekturtemperatur aus der gemessenen Verlustleistung einer den Temperatursensor enthaltenden integrierten Schaltung, aus der beim Abgleich gemessenen und im Speicher abgelegten Verlustleistung und aus dem Wärmewiderstand der integrierten Schaltung gegenüber der Umgebung berechnet wird.

Bei der erfindungsgemäßen Sensoranordnung sind ohnehin ein Temperatursensor und ein Mikrocontroller vorhanden, so dass zur Durchführung des Verfahrens gemäß der Weiterbildung kein zusätzlicher Hardware-Aufwand, sondern lediglich eine Implementierung der erfindungsgemäßen Maßnahmen als Programm erforderlich ist.

Bei der erfindungsgemäßen Sensoranordnung sind Mittel vorgesehen, die ein schnelles Einschwingen des Regelkreises dadurch bewirken, dass nach dem Einschalten der Sensoranordnung aus einem zuvor gemessenen und in einem Speicher abgelegten Wert der Eigenfrequenz und Parametern, die eine Änderung der Eigenfrequenz seit der Messung bewirken, ein Anfangswert für die Eigenfrequenz aus dem gespeicherten Wert, dessen Temperaturabhängigkeit und der beim Einschalten gemessenen Temperatur berechnet wird und dass das Erregersignal mit dem berechneten Anfangswert der Frequenz dem Vibrationskreisel zugeführt wird.

Eine vorteilhafte Ausgestaltung dieser Anordnung besteht vorzugsweise darin, dass die Mittel einen Mikrocontroller mit einem nicht-flüchtigen Speicher und einen Frequenz-Synthesierer umfassen.

Zur Überwachung der erfindungsgemäßen Sensoranordnung sind Mittel vorgesehen

- zur Berechnung eines ersten Wertes einer Temperaturänderung aus der Differenz zwischen dem aktuellen Wert der Eigenfrequenz, einem zuvor bei einem Abgleich gemessenen und in einem Speicher abgelegten Wert der Eigenfrequenz, der bei einer Referenztemperatur gemessen wurde, und aus dem Temperaturkoeffizienten der Eigenfrequenz,
- zur Berechnung eines zweiten Wertes einer Temperaturänderung aus der Differenz zwischen den Ausgangsgrößen eines Temperatursensors bei der aktuellen Temperatur und bei der in dem Speicher abgelegten Referenztemperatur und dem Temperaturkoeffizienten des Temperatursensors,
- zum Vergleich der beiden berechneten Werte und
- zur Erzeugung eines Fehlersignals bei einer ein vorgegebenes Maß überschreitenden Abweichung.

Durch die in den abhängigen Ansprüchen aufgeführten Maßnahmen sind weitere vorteilhafte Weiterbildungen und Verbesserungen der erfindungsgemäßen Sensoranordnung möglich.

Die Erfindung lässt zahlreiche Ausführungsformen zu. Eine davon ist schematisch in der Zeichnung dargestellt und nachfolgend beschrieben. Die Zeichnung zeigt ein Blockschaltbild einer Sensoranordnung mit einem Vibrationskreisel mit den zur Durchführung des erfindungsgemäßen Verfahrens dienenden Elementen.

Die Sensoranordnung sowie Teile davon sind zwar als Blockschaltbilder dargestellt. Dieses bedeutet jedoch nicht, dass die erfindungsgemäße Sensoranordnung auf eine Realisierung mit Hilfe von einzelnen den Blöcken entsprechenden Schaltungen beschränkt ist. Die erfindungsgemäße Sensoranordnung ist vielmehr in besonders vorteilhafter Weise mit Hilfe von hochintegrierten Schaltungen realisierbar. Dabei können Mikroprozessoren eingesetzt werden, welche bei geeigneter Programmierung die in den Blockschaltbildern dargestellten Verarbeitungsschritte durchführen.

Die Sensoranordnung weist einen Vibrationskreisel 1 auf mit zwei Eingängen 2, 3 für ein primäres Erregersignal PD und ein sekundäres Erregersignal SD. Die Erregung erfolgt durch geeignete Wandler, beispielsweise elektromagnetische. Der Vibrationskreisel weist ferner zwei Ausgänge 4, 5 für ein primäres Ausgangssignal PO und ein sekundäres Ausgangssignal SO auf. Diese Signale geben die jeweilige Vibration an räumlich versetzten Stellen des Kreisels wieder. Derartige Kreisel sind beispielsweise aus EP 0 307 321 A1 bekannt und beruhen auf der Wirkung der Corioliskraft.

Der Vibrationskreisel 1 stellt ein Filter hoher Güte dar, wobei die Strecke zwischen dem Eingang 2 und dem Ausgang 4 Teil eines primären Regelkreises 6 und die Strecke zwischen dem Eingang 3 und dem Ausgang 5 Teil eines sekundären Regelkreises ist, der nicht dargestellt ist, da dessen Erläuterung zum Verständnis der Erfindung nicht erforderlich ist. Der primäre Regelkreis 6 dient zur Erregung von Schwingungen mit der Resonanzfrequenz des Vibrationskreisels von beispielsweise 14 kHz. Die Erregung erfolgt dabei in

einer Achse des Vibrationskreisels, zu welcher die für den sekundären Regelkreis benutzte Schwingungsrichtung um 90° versetzt ist. Im nicht dargestellten sekundären Regelkreis wird das Signal SO in zwei Komponenten aufgespalten, von denen eine nach geeigneter Verarbeitung als der Drehrate proportionales Signal abnehmbar ist.

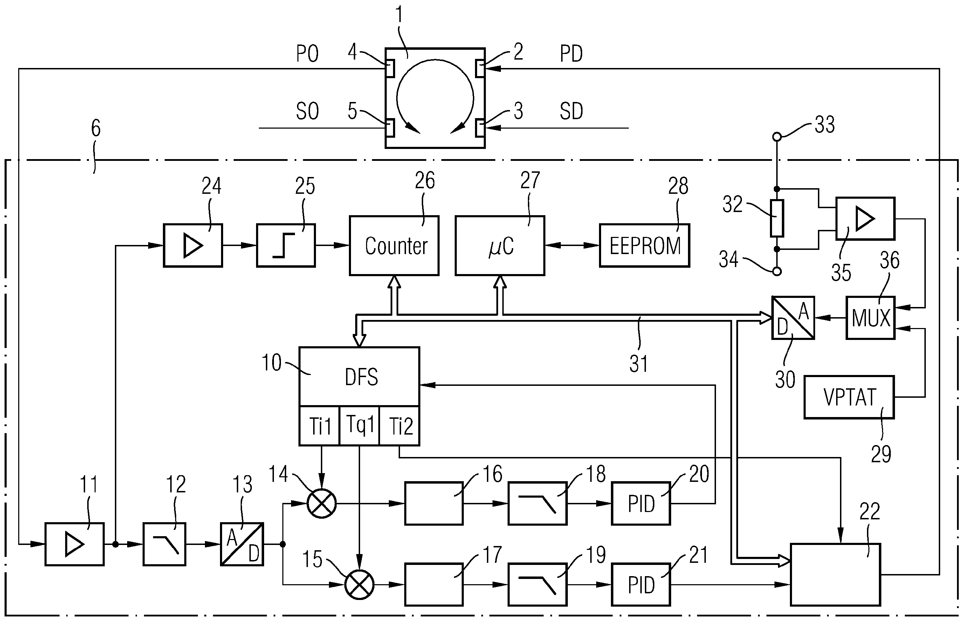

In beiden Regelkreisen erfolgt ein wesentlicher Teil der Signalverarbeitung digital. Die zur Signalverarbeitung erforderlichen Taktsignale werden in einem quarzgesteuerten digitalen Frequenz-Synthesierer 10 erzeugt, dessen Taktfrequenz im dargestellten Beispiel 14,5 MHz beträgt. Für die Anwendung des erfindungsgemäßen Verfahrens kommt im Wesentlichen der primäre Regelkreis in Frage, weshalb in Fig. 1 ein Ausführungsbeispiel für den primären Regelkreis dargestellt sind.

Der Regelkreis weist einen Verstärker 11 für das Ausgangssignal PO auf, an den sich ein Anti-Alias-Filter 12 und ein Analog/Digital-Wandler 13 anschließen. Mit Hilfe von Multiplizierern 14, 15, denen Träger Ti1 und Tq1 zugeführt werden, erfolgt eine Aufspaltung in eine Inphase-Komponente und eine Quadratur-Komponente. Beide Komponenten durchlaufen anschließend je ein (sinx/x)-Filter 16, 17 und ein Tiefpassfilter 18, 19. Der gefilterte Realteil wird einem PID-Regler 20 zugeführt, der den digitalen Frequenz-Synthesierer steuert, wodurch eine Phasenregelschaltung geschlossen wird, welche die richtige Phasenlage der Träger Ti1 und Tq1 bewirkt. Außerdem wird ein Träger Tq2 erzeugt, der in einer Schaltung 22 mit dem Ausgangssignal eines weiteren PID-Reglers 21 moduliert wird, der den tiefpassgefilterten Imaginärteil erhält. Das Ausgangssignal der Schaltung 22 wird dem Eingang 2 des Vibrationskreisels 1 als Erregersignal PD zugeführt. Anstelle der PID-Regler können je nach Voraussetzungen im Einzelnen auch andere Regler, beispielsweise PI-Regler, vorgesehen sein.

Zur Durchführung des erfindungsgemäßen Verfahrens ist ein Mikrocontroller 27 vorgesehen, der die einzelnen Schritte des erfindungsgemäßen Verfahrens steuert und Zugriff auf einen nicht-flüchtigen Speicher 28 hat, der als EEPROM ausgebildet ist. Ferner wird für das erfindungsgemäße Verfahren ein bei vielen Sensorschaltungen ohnehin vorhandener Temperatursensor benutzt, der aus einem eigentlichen Sensor 29 und einem Analog/Digital-Wandler 30 besteht. Ein Bussystem 31 verbindet die aufgeführten Komponenten untereinander und mit dem digitalen Frequenz-Synthesierer 10 sowie mit der Schaltung 22.

Die Berechnung des Anfangswertes erfolgt in einfacher Weise nach der Gleichung $F_{0Ta} = (V_{TA} - V_{RT}) / T_{Cv} \times T_{Cf0} + F_{0RT}$. Dabei sind $F_{0Ta}$ die Eigenfrequenz des Vibrationskreisels bei der mit Hilfe des Temperatursensors 29 gemessenen Temperatur, also der Anfangswert, und $F_{0RT}$ die bei Raumtemperatur während des Abgleichverfahrens gemessene und im Speicher 28 abgelegte Eigenfrequenz. $T_{Cv}$ ist der Temperaturkoeffizient des Temperatursensors 29, während $T_{Cf0}$ für den Temperaturkoeffizienten der Eigenfrequenz des Vibrationskreisels steht. $V_{TA}$ und $V_{RT}$ sind die beiden Ausgangsspannungen des Temperatursensors 29 bei der beim Einschalten herrschenden und der beim Abgleich herrschenden im Speicher 28 abgelegten Temperatur.

Nach der Berechnung des Anfangswertes wird vom Mikrocontroller 27 der Frequenz-Synthesierer 10 auf die Erzeugung eines Erregersignals mit dem Anfangswert als Frequenz eingestellt. Dabei ist, beispielsweise durch Unterbrechung der Takte Ti1 und Tq1, der Regelkreis noch unterbrochen. Sobald der Vibrationskreisel ein Erregersignal erhalten hat, wird der Regelkreis geschlossen - und zwar zunächst die Phasen- und danach die Verstärkungsregelung.

Zur Überwachung werden von Zeit zu Zeit während des Betriebes diese Größen aus dem Speicher 28 ausgelesen und zum Vergleich mit der jeweils aktuellen Eigenfrequenz unter Berücksichtigung der aktuellen mit dem Sensor 29 gemessenen Temperatur (Ausgangsspannung $V_{TA}$) verglichen. Dem Vergleich liegen beispielsweise folgende Gleichungen zugrunde:

$$T_{adelta1} = (F_{0TA} - F_{0RT}) / T_{CF0}.$$

$$T_{adelta2} = (V_{TA} - V_{RT}) / T_{Cv}$$

Dabei ist $T_{adelta2}$ die mit Hilfe des Temperatursensors ermittelte Temperaturänderung, $T_{adelta1}$ die aus der Änderung der Frequenz ermittelte Temperaturänderung, $T_{Cv}$ der im Speicher abgelegte Temperaturkoeffizient des Temperatursensors 29, $F_{0TA}$ die aktuelle Frequenz, $F_{0RT}$ die im Speicher abgelegte Frequenz und $T_{CF0}$ der ebenfalls im Speicher abgelegte Temperaturkoeffizient der Eigenfrequenz des Vibrationskreisels.

Der aktuelle Wert der Eigenfrequenz kann aus der jeweiligen Einstellung des Teilers des digitalen Frequenz-Synthesierers 10 und dessen Taktfrequenz gewonnen werden. Es ist jedoch auch möglich, den aktuellen Wert mit Hilfe einer Frequenzmesseinrichtung zu berechnen, die aus einem weiteren Verstärker 24, einem Schmitt-Trigger 25 und einem Zähler 26 besteht.

Im Idealfall sind $T_{adelta1}$ und $T_{adelta2}$ gleich; nimmt eine Differenz Werte an, die ein vorgegebenes Maß überschreiten, kann auf das Vorliegen eines von mehreren möglichen Fehlern geschlossen werden und beispielsweise ein Fehler in Form des Aufleuchtens einer Warnlampe signalisiert werden bzw. im Speicher abgelegt werden, um für spätere Diagnosezwecke zur Verfügung zu stehen.

Zur Berücksichtigung einer gegenüber dem Abgleich verschiedenen Verlustleistung der mindestens den primären Regelkreis 6 enthaltenden Schaltung wird mit Hilfe eines Messwiderstandes 32 mit dem Wert R die Stromaufnahme I der Schaltung gemessen. Die Betriebsspannung U für die Schaltung wird einem Anschluss 33 zugeführt und über einen Schaltungspunkt 34 an die verschiedenen Komponenten verteilt. Der Spannungsabfall $U_i$ am Messwiderstand 32 wird in einem Verstärker 35 um einen Faktor v verstärkt und über einen Multiplexer 36 dem Analog-/Digital-Wandler 30 zugeführt. Der Mikrocontroller 27 berechnet dann die Verlustleistung nach der Gleichung $P = U*I = U*U_i/(R*v)$. Beim Abgleich werden die Verlustleistung $P_{RT}$ und die zugehörige Umgebungstemperatur $T_{RT}$ im Speicher abgelegt. Die während des Betriebes berechnete Verlustleistung wird im Folgenden mit $P_A$ bezeichnet.

Damit kann eine Korrekturtemperatur berechnet werden, nämlich als $T_{kor} = T_{RT} + (P_A - P_{RT})*R_{TH}$, wobei $R_{TH}$ den Wärmewiderstand zwischen der Schaltung und der Umgebung bedeutet. Die oben genannte Gleichung zur Berechnung von $T_{adelta2}$ wird damit wie folgt ergänzt:

$$T_{adelta2kor} = T_{adelta2} - T_{kor}$$

Wie oben bereits erwähnt, kann bei Ungleichheit ein Fehlersignal ausgegeben werden, nämlich wenn:

$$T_{adelta1} \neq T_{adelta2kor} \, .$$

**Patentansprüche**

1. Verfahren zum Betrieb eines Vibrationskreisels, der einen Resonator darstellt und Teil mindestens eines Regelkreises ist, der den Vibrationskreisel durch Zuführung eines Erregersignals mit seiner Eigenfrequenz erregt, wobei dem Vibrationskreisel ein Ausgangssignal entnehmbar ist, aus dem durch Filterung und Verstärkung das Erregersignal abgeleitet wird,
dadurch gekennzeichnet, dass nach dem Einschalten einer Sensoranordnung mit dem Vibrationskreisel aus einem zuvor gemessenen und in einem Speicher abgelegten Wert der Eigenfrequenz und Parametern, die eine Änderung der Eigenfrequenz seit der Messung bewirken, ein Anfangswert für die Eigenfrequenz berechnet wird und dass das Erregersignal mit dem berechneten Anfangswert der Frequenz dem Vibrationskreisel zugeführt wird, wobei der Anfangswert aus dem gespeicherten Wert, dessen Temperaturabhängigkeit und der beim Einschalten gemessenen Temperatur berechnet wird.

2. Verfahren zum Betrieb eines Vibrationskreisels, der einen Resonator darstellt und Teil mindestens eines Regelkreises ist, der den Vibrationskreisel durch Zuführung eines Erregersignals mit seiner Eigenfrequenz erregt, wobei dem Vibrationskreisel ein Ausgangssignal entnehmbar ist, aus dem durch Filterung und Verstärkung das Erregersignal abgeleitet wird,
dadurch gekennzeichnet, dass nach dem Einschalten einer Sensoranordnung mit dem Vibrationskreisel aus einem zuvor gemessenen und in einem Speicher abgelegten Wert der Eigenfrequenz und Parametern, die eine Änderung der Eigenfrequenz seit der Messung bewirken, ein Anfangswert für die Eigenfrequenz berechnet wird und dass das Erregersignal mit dem berechneten Anfangswert der Frequenz dem Vibrationskreisel zugeführt wird,

- dass zur Überwachung aus der Differenz zwischen dem aktuellen Wert der Eigenfrequenz und einem zuvor bei einem Abgleich gemessenen und in einem Speicher abgelegten Wert der Eigenfrequenz, der bei einer Referenztemperatur gemessen wurde, und aus dem Temperaturkoeffizienten der Eigenfrequenz ein erster Wert der Temperaturänderung gegenüber der Messung berechnet wird,
- dass aus der Differenz zwischen den Ausgangsgrößen eines Temperatursensors bei der aktuellen Temperatur und bei der in dem Speicher abgelegten Referenztemperatur und dem Temperaturkoeffizienten des Temperatursensors ein zweiter Wert der Temperaturänderung gegenüber der Messung berechnet wird,
- dass die beiden berechneten Werte verglichen werden und
- dass bei einer ein vorgegebenes Maß überschreitenden Abweichung ein Fehlersignal erzeugt wird.

3. Verfahren nach einem der Ansprüche 1 oder 2, dadurch gekennzeichnet, dass ein im Regelkreis vorhandener Phasendetektor mit dem Ausgangssignal bereits in eine Anfangsphase beaufschlagt ist und dass eine Phasenregelung verzögert eingeschaltet wird.

4. Verfahren nach Anspruch 3, dadurch gekennzeichn e t, dass nach dem Einschalten der Phasenregelung eine Verstärkungsregelung eingeschaltet wird.

5. Verfahren nach einem der Ansprüche 3 oder 4, dadurch gekennzeichnet, dass das Erregersignal dem Vibrationskreisel in eine Anfangsphase mit einer maximal zulässigen Amplitude zugeführt wird.

6. Verfahren nach Anspruch einem der Ansprüche 2 bis 5, dadurch gekennzeichnet, dass in die Berechnung eine Korrekturtemperatur einbezogen wird, die gegenüber dem Abgleich des Temperatursensors geänderte thermische Bedingungen berücksichtigt.

7. Verfahren nach Anspruch 6, dadurch gekennzeichnet, dass die Korrekturtemperatur aus der gemessenen Verlustleistung einer den Temperatursensor enthaltenden integrierten Schaltung, aus der beim Abgleich gemessenen und im Speicher abgelegten Verlustleistung und aus dem Wärmewiderstand der integrierten Schaltung gegenüber der Umgebung berechnet wird.

8. Sensoranordnung mit mindestens einem Regelkreis (1, 6), mit einem Vibrationskreisel (1), der einen Resonator darstellt und Teil des mindestens einen Regelkreises ist, der den Vibrationskreisel durch Zuführung eines Erregersignals mit seiner Eigenfrequenz erregt, wobei dem Vibrationskreisel ein Ausgangssignal entnehmbar ist, aus dem durch Filterung und Verstärkung das Erregersignal abgeleitet wird, dadurch gekennzeichnet, dass die Sensoranordnung Mittel (27) aufweist, die so angeordnet sind, dass sie ein schnelles Einschwingen des Regelkreises (1, 6) dadurch bewirken, dass nach dem Einschalten der Sensoranordnung aus einem zuvor gemessenen und in einem Speicher (28) abgelegten Wert der Eigenfrequenz und Parametern, die eine Änderung der Eigenfrequenz seit der Messung bewirken, ein Anfangswert für die Eigenfrequenz berechnet wird und dass das Erregersignal mit dem berechneten Anfangswert der Frequenz dem Vibrationskreisel (1) zugeführt wird, wobei die Mittel (27) so angeordnet sind, dass der Anfangswert aus dem gespeicherten Wert der Eigenfrequenz, dessen Temperaturabhängigkeit und der beim Einschalten gemessenen Temperatur berechnet wird.

9. Sensoranordnung mit mindestens einem Regelkreis (1, 6), mit einem Vibrationskreisel (1) , der einen Resonator darstellt und Teil des mindestens einen Regelkreises ist, der den Vibrationskreisel durch Zuführung eines Erregersignals mit seiner Eigenfrequenz erregt, wobei dem Vibrationskreisel ein Ausgangssignal entnehmbar ist, aus dem durch Filterung und Verstärkung das Erregersignal abgeleitet wird, **dadurch gekennzeichnet, dass** die Sensoranordnung Mittel (27) aufweist, die so angeordnet sind, dass sie ein schnelles Einschwingen des Regelkreises (1, 6) dadurch bewirken, dass nach dem Einschalten der Sensoranordnung aus einem zuvor gemessenen und in einem Speicher (28) abgelegten Wert der Eigenfrequenz und Parametern, die eine Änderung der Eigenfrequenz seit der Messung bewirken, ein Anfangswert für die Eigenfrequenz berechnet wird und dass das Erregersignal mit dem berechneten Anfangswert der Frequenz dem Vibrationskreisel (1) zugeführt wird, wobei zur Überwachung der Sensoranordnung Mittel (27) vorgesehen sind

    - zur Berechnung eines ersten Wertes einer Temperaturänderung aus der Differenz zwischen dem aktuellen Wert der Eigenfrequenz, einem zuvor bei einem Abgleich gemessenen und in einem Speicher abgelegten Wert der Eigenfrequenz, der bei einer Referenztemperatur gemessen wurde, und aus dem Temperaturkoeffizienten der Eigenfrequenz,
    - zur Berechnung eines zweiten Wertes einer Temperaturänderung aus der Differenz zwischen den Ausgangsgrößen eines Temperatursensors bei der aktuellen Temperatur und bei der in dem Speicher abgelegten Referenztemperatur und dem Temperaturkoeffizienten des Temperatursensors,
    - zum Vergleich der beiden berechneten Werte und
    - zur Erzeugung eines Fehlersignals bei einer ein vorgegebenes Maß überschreitenden Abweichung.

10. Sensoranordnung nach Anspruch 8 oder 9, **dadurch gekennzeichnet, dass** die Mittel einen Mikrocontroller (27) mit einem nicht-flüchtigen Speicher (28) und einen Frequenz-Synthesierer (10) umfassen.

11. Sensoranordnung nach einem der Ansprüche 8 bis 10, **dadurch gekennzeichnet, dass** ein im Regelkreis (1, 6) vorhandener Phasendetektor (14, 15) mit dem Ausgangssignal bereits in eine Anfangsphase beaufschlagt ist und dass eine Phasenregelung verzögert eingeschaltet wird.

12. Sensoranordnung nach Anspruch 11, **dadurch gekennzeichnet, dass** nach dem Einschalten der Phasenregelung eine Verstärkungsregelung eingeschaltet wird.

13. Sensoranordnung nach einem der Ansprüche 11 oder 12, **dadurch gekennzeichnet, dass** das Erregersignal dem Vibrationskreisel (1) in eine Anfangsphase mit einer maximal zulässigen Amplitude zugeführt wird.

14. Anordnung nach einem der Ansprüche 9 bis 13, **dadurch gekennzeichnet, dass** die Mittel einen Mikrocontroller (27) mit einem nicht-flüchtigen Speicher (28) umfassen.

15. Anordnung nach einem der Ansprüche 9 bis 14, **gekennz e i c h n e t** durch Mittel, die eine Korrekturtemperatur in die Berechnung einbeziehen, die gegenüber dem Abgleich des Temperatursensors geänderte thermische Bedingungen berücksichtigt.

16. Anordnung nach Anspruch 15, **gekennzeichnet durch** Mittel, welche die Korrekturtemperatur aus der gemessenen Verlustleistung einer den Temperatursensor enthaltenden integrierten Schaltung, aus der beim Abgleich gemessenen und im Speicher abgelegten Verlustleistung und aus dem Wärmewiderstand der integrierten Schaltung gegenüber der Umgebung berechnen.

17. Anordnung nach einem der Ansprüche 9 bis 16, **gekennzeichnet durch** Mittel zur Bestimmung des aktuellen Wertes aus der jeweiligen Einstellung des Teilers eines digitalen Frequenz-Synthesierers (10) und dessen Taktfrequenz.

**Claims**

1. Method for operation of a vibration gyro, which represents a resonator and is part of at least one control loop which excites the vibration gyro by supplying an exciter signal at its natural frequency, in which case an output signal can be tapped off from the vibration gyro, from which output signal the exciter signal is derived by filtering and amplification, **characterized in that**, once a sensor arrangement with the vibration gyro has been switched on, an initial value of the natural frequency is calculated from a previously measured value, stored in a memory, of the natural frequency and from parameters which have resulted in a change in the natural frequency since the measurement, and **in that** the exciter signal is supplied to the vibration gyro at the calculated initial value of the frequency, wherein the initial value is calculated from the stored value, its temperature dependency and the temperature measured on switch on.

2. Method for operation of a vibration gyro, which represents a resonator and is part of at least one control loop which excites the vibration gyro by supplying an exciter signal at its natural frequency, in which case an output signal can be tapped off from the vibration gyro, from which output signal the exciter signal is derived by filtering and amplification, **characterized in that**, once a sensor arrangement with the vibration gyro has been switched on, an initial value of the natural frequency is calculated from a previously measured value, stored in a memory, of the natural frequency and from parameters which have resulted in a change in the natural frequency since the measurement, and **in that** the exciter signal is supplied to the vibration gyro at the calculated initial value of the frequency,

     - **in that** a first value of the temperature change with respect to the measurement is calculated for monitoring purposes from the difference between the current value of the natural frequency, and a value of the natural frequency which was previously measured during adjustment and stored in a memory, and was measured at a reference temperature, and from the temperature coefficient of the natural frequency,
     - **in that** a second value of the temperature change with respect to the measurement is calculated from the difference between the output variables from a temperature sensor at the current temperature and at the reference temperature stored in the memory, and the temperature coefficient of the temperature sensor,
     - **in that** the two calculated values are compared, and
     - **in that** an error signal is produced if the discrepancy exceeds a predetermined level.

3. Method according to one of Claims 1 or 2, **characterized in that** a phase detector in the control loop has the output signal applied to it in an initial value, and **in that** phase control is switched on with a delay.

4. Method according to Claim 3, **characterized in that** gain control is switched on once the phase control has been switched on.

5. Method according to one of Claims 3 or 4, **characterized in that** the exciter signal is supplied to the vibration gyro with the maximum permissible amplitude in an initial phase.

6. Method according to one of Claims 2 to 5, **characterized in that** a correction temperature, which takes account of the change in the thermal conditions since the adjustment of the temperature sensor, is included in the calculation.

7. Method according to Claim 6, **characterized in that** the correction temperature is calculated from the measured power loss of an integrated circuit which contains the temperature sensor, from the power loss measured during adjustment and stored in the memory, and from the thermal resistance of the integrated circuit with respect to the environment.

8. Sensor arrangement having at least one control loop (1, 6), having a vibration gyro (1) which represents a resonator and is part of the at least one control loop which excites the vibration gyro by supplying an exciter signal at its natural frequency, in which case an output signal can be tapped off from the vibration gyro, from which output signal the exciter signal is derived by filtering and amplification, **characterized in that** the sensor arrangement has means (27) which are arranged so that they rapidly stabilize the control loop (1, 6) **in that** once the sensor arrangement has been switched on, an initial value of the natural frequency is calculated from a previously measured value, stored in a memory (28), of the natural frequency and from parameters which have resulted in a change in the natural frequency since the measurement, and **in that** the exciter signal is supplied to the vibration gyro (1) at the calculated initial value of the frequency, wherein the means (27) are arranged so that the initial value is calculated from the stored value of the natural frequency, its temperature dependency and the temperature measured on switch on.

9. Sensor arrangement having at least one control loop (1, 6), having a vibration gyro (1) which represents a resonator and is part of the at least one control loop which excites the vibration gyro by supplying an exciter signal at its natural frequency, in which case an output signal can be tapped off from the vibration gyro, from which output signal the exciter signal is derived by filtering and amplification, **characterized in that** the sensor arrangement has means (27) which are arranged so that they rapidly stabilize the control loop (1, 6) **in that** once the sensor arrangement has been switched on, an initial value of the natural frequency is calculated from a previously measured value, stored in a memory (28), of the natural frequency and from parameters which have resulted in a change in the natural frequency since the measurement, and **in that** the exciter signal is supplied to the vibration gyro (1) at the calculated initial value of the frequency, wherein, in order to monitor the sensor arrangement, means (27) are provided

- for calculation of a first value of a temperature change from the difference between the current value of the natural frequency, and a value of the natural frequency which was previously measured during adjustment and stored in a memory, and was measured at a reference temperature, and from the temperature coefficient of the natural frequency,
- for calculation of a second value of a temperature change from the difference between the output variables from a temperature sensor at the current temperature and at the reference temperature stored in the memory, and the temperature coefficient of the temperature sensor,
- for comparison of the two calculated values, and
- for production of an error signal if the discrepancy exceeds a predetermined level.

10. Sensor arrangement according to Claim 8 or 9, **characterized in that** the means comprise a microcontroller (27) with a non-volatile memory (28) and a frequency synthesizer (10).

11. Sensor arrangement according to one of Claims 8 to 10, **characterized in that** a phase detector (14, 15) in the control loop (1, 6) has the output signal applied to it in an initial phase, and **in that** phase control is switched on with a delay.

12. Sensor arrangement according to Claim 11, **characterized in that** gain control is switched on once the phase control has been switched on.

13. Sensor arrangement according to one of Claims 11 or 12, **characterized in that** the exciter signal is supplied to the vibration gyro (1) at the maximum permissible amplitude in an initial phase.

14. Arrangement according to one of Claims 9 to 13, **characterized in that** the means comprise a microcontroller (27) with a non-volatile memory (28).

15. Arrangement according to one of Claims 9 to 14, **characterized by** means which include a correction temperature in the calculation, which correction temperature takes account of the change in the thermal conditions since the adjustment of the temperature sensor.

16. Arrangement according to Claim 15, **characterized**

**by** means which calculate the correction temperature from the measured power loss of an integrated circuit which contains the temperature sensor, from the power loss measured during adjustment and stored in the memory, and from the thermal resistance of the integrated circuit with respect to the environment.

17. Arrangement according to one of Claims 9 to 16, **characterized by** means for determining the current value from the respective setting of the divider of a digital frequency synthesizer (10) and its clock frequency.

**Revendications**

1. Procédé de mise en fonctionnement d'un gyroscope vibrant représentant un résonateur et faisant partie d'au moins un circuit de régulation, qui excite le gyroscope en lui délivrant un signal d'excitation ayant sa fréquence propre, dans lequel un signal de sortie peut être prélevé à partir du gyroscope vibrant, signal à partir duquel le signal d'excitation peut être dérivé par filtrage et amplification, **caractérisé en ce qu'**une valeur de départ de la fréquence propre est calculée après la mise en oeuvre d'un système de capteur comportant le gyroscope vibrant à partir d'une valeur de la fréquence propre préalablement mesurée et stockée dans une mémoire et de paramètres qui provoquent une modification de la fréquence propre à partir de la mesure et **en ce que** le signal d'excitation ayant la valeur de départ calculée de la fréquence est délivré au gyroscope vibrant, dans lequel la valeur de départ est calculée à partir de la valeur stockée, de sa dépendance par rapport à la température et de la température mesurée lors de la mise en oeuvre.

2. Procédé de mise en fonctionnement d'un gyroscope vibrant représentant un résonateur et faisant partie d'au moins un circuit de régulation, qui excite le gyroscope vibrant en lui appliquant un signal d'excitation ayant sa fréquence propre, dans lequel un signal de sortie peut être prélevé à partir du gyroscope vibrant, signal à partir duquel le signal d'excitation est dérivé par filtrage et amplification, **caractérisé en ce qu'**une valeur de départ de la fréquence propre est calculée après la mise en oeuvre d'un système de capteur comportant le gyroscope vibrant à partir d'une valeur de fréquence propre préalablement mesurée et stockée dans une mémoire et de paramètres qui provoquent une modification de la fréquence propre à partir de la mesure et **en ce que** le signal d'excitation ayant la valeur de départ calculée de la fréquence est délivré au gyroscope vibrant,

- **en ce qu'**une première valeur de la variation de température par rapport à la mesure est calculée à des fins de surveillance à partir de la différence entre la valeur actuelle de la fréquence propre et une valeur préalablement mesurée lors d'un étalonnage et stockée dans une mémoire, qui a été mesurée à une température de référence, et à partir du coefficient de température de la fréquence propre,

- **en ce qu'**une deuxième valeur de la variation de température par rapport à la mesure est calculée à partir de la différence entre les grandeurs de sortie d'un capteur de température à la température actuelle et à la température de référence stockée dans la mémoire et du coefficient de température du capteur de température,

- **en ce que** les deux valeurs calculées sont comparées, et

- **en ce que**, lorsque l'écart dépasse une valeur prédéterminée, un signal d'erreur est généré.

3. Procédé selon la revendication 1 ou 2, **caractérisé en ce qu'**un détecteur de phase présent dans le circuit de régulation est déjà soumis au signal de sortie lors d'une phase de démarrage et **en ce qu'**une régulation de phase est mise en oeuvre de manière retardée.

4. Procédé selon la revendication 3, **caractérisé en ce qu'**après la mise en oeuvre de la régulation de phase, une régulation d'amplification est mise en oeuvre.

5. Procédé selon la revendication 3 ou 4, **caractérisé en ce que** le signal d'excitation est délivré au gyroscope vibrant lors d'une phase de démarrage avec une amplitude admissible maximale.

6. Procédé selon l'une quelconque des revendications 2 à 5, **caractérisé en ce que**, lors du calcul, on prend en compte une température de correction qui tient compte de conditions thermiques modifiées par rapport à l'étalonnage du capteur de température.

7. Procédé selon la revendication 6, **caractérisé en ce que** la température de correction est calculée à partir de la puissance dissipée mesurée d'un circuit intégré comportant le capteur de température, à partir de la puissance dissipée mesurée lors de l'étalonnage et stockée dans la mémoire et à partir de la résistance thermique du circuit intégré par rapport à l'environnement.

8. Système de capteur comportant au moins un circuit de régulation (1, 6) muni d'un gyroscope vibrant (1), représentant un résonateur et faisant partie de l'au moins un circuit de régulation, lequel circuit de régulation excite le gyroscope vibrant en lui appliquant un signal d'excitation, dans lequel un signal de sortie peut être prélevé à partir du gyroscope vibrant, signal à partir duquel le signal d'excitation est dérivé par filtrage et amplification, **caractérisé en ce que** le système de capteur comporte des moyens (27) qui sont disposés de manière à provoquer une oscillation transitoire rapide du circuit de régulation (1, 6) de telle manière qu'après la mise en oeuvre du système de capteur, une valeur de départ de la fréquence propre soit calculée à partir d'une valeur de la fréquence propre préalablement mesurée et stockée dans une mémoire (28) et de paramètres qui provoquent une modification de la fréquence propre à partir de la mesure et **en ce que** le signal d'excitation ayant la valeur de départ calculée de la fréquence est délivré au gyroscope vibrant (1), dans lequel les moyens (27) sont disposés de manière à ce que la valeur de départ soit calculée à partir de la valeur stockée de la fréquence propre, de sa dépendance par rapport à la température et de la température mesurée lors de la mise en oeuvre.

9. Système de capteur comportant au moins un circuit de régulation (1, 6), comportant un gyroscope vibrant (1) représentant un résonateur et faisant partie de l'au moins un circuit de régulation, qui excite le gyroscope vibrant en lui appliquant un signal d'excitation ayant sa fréquence propre, dans lequel un signal de sortie peut être prélevé à partir du gyroscope vibrant, signal à partir duquel le signal d'excitation peut être dérivé par filtrage et amplification, **caractérisé en ce que** le système de capteur comporte des moyens (27) qui sont disposés de manière à provoquer une oscillation transitoire rapide du circuit de régulation (1, 6) de manière à ce qu'après la mise en oeuvre du système de capteur, une valeur de départ de la fréquence propre soit calculée à partir d'une valeur de la fréquence propre préalablement mesurée et stockée dans une mémoire (28) et de paramètres qui provoquent une modification de la fréquence propre à partir de la mesure, et **en ce que** le signal d'excitation ayant la valeur de départ calculée de la fréquence est délivré au gyroscope vibrant (1), dans lequel il est prévu à des fins de surveillance du système de capteur des moyens (27) destinés

- à calculer une première valeur d'une variation de température à partir de la différence entre la valeur actuelle de la fréquence propre, d'une valeur de la fréquence propre préalablement mesurée lors d'un étalonnage et stockée dans une mémoire, laquelle valeur a été mesurée à une température de référence, et à partir du coefficient de température de la fréquence propre,

- à calculer une deuxième valeur d'une variation de température à partir de la différence entre les grandeurs de sortie d'un capteur de température à la température actuelle et à la température de référence stockée dans la mémoire et du coefficient de température du capteur de température,
- à comparer les deux valeurs calculées et
- à générer un signal d'erreur lorsqu'un écart dépasse une valeur prédéterminée.

**10.** Système de capteur selon la revendication 8 ou 9, **caractérisé en ce que** les moyens comprennent un microcontrôleur (27) ayant une mémoire non volatile (28) et un synthétiseur de fréquence (10).

**11.** Système de capteur selon l'une quelconque des revendications 8 à 10, **caractérisé en ce qu'**un détecteur de phase (14, 15) présent dans le circuit de régulation (1, 6) est déjà soumis au signal de sortie lors d'une phase de démarrage et **en ce qu'**une régulation de phase est mise en oeuvre de manière retardée.

**12.** Système de capteur selon la revendication 11, **caractérisé en ce qu'**après la mise en oeuvre de la régulation de phase, une régulation d'amplification est mise en oeuvre.

**13.** Système de capteur selon la revendication 11 ou 12, **caractérisé en ce que** le signal d'excitation est délivré au gyroscope vibrant (1) lors d'une phase de démarrage avec une amplitude admissible maximale.

**14.** Système selon l'une quelconque des revendications 9 à 13, **caractérisé en ce que** les moyens comprennent un microcontrôleur (27) muni d'une mémoire non volatile (28).

**15.** Système selon l'une quelconque des revendications 9 à 14, **caractérisé par** des moyens qui prennent en compte une température de correction lors du calcul, laquelle température de correction tient compte de conditions thermiques modifiées par rapport à l'étalonnage du capteur de température.

**16.** Système selon la revendication 15, **caractérisé par** des moyens qui calculent la température de correction à partir de la puissance dissipée mesurée d'un circuit intégré comportant le capteur de température, à partir de la puissance dissipée mesurée lors de l'étalonnage et stockée dans la mémoire et à partir de la résistance thermique du circuit intégré par rapport à l'environnement.

**17.** Système selon l'une quelconque des revendications 9 à 16, **caractérisé par** des moyens destinés à déterminer la valeur actuelle à partir du réglage respectif du diviseur d'un synthétiseur de fréquence numérique (10) et de sa fréquence d'horloge.

EP 1 924 821 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0461761 B1
- WO 2004020948 A
- EP 1600732 A
- EP 0307321 A1